(19) Europäisches Patentamt
European Patent Office
Office européen des brevets

(11) **EP 4 403 773 A1**

(12) # EUROPEAN PATENT APPLICATION
published in accordance with Art. 153(4) EPC

(43) Date of publication:
**24.07.2024 Bulletin 2024/30**

(21) Application number: **22867075.8**

(22) Date of filing: **08.07.2022**

(51) International Patent Classification (IPC):
**F04B 51/00** (2006.01)   **G01N 30/86** (2006.01)

(52) Cooperative Patent Classification (CPC):
**F04B 51/00; G01N 30/86**

(86) International application number:
**PCT/JP2022/027160**

(87) International publication number:
**WO 2023/037751 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.09.2021 JP 2021148620**

(71) Applicant: HITACHI HIGH-TECH CORPORATION
Tokyo 105-6409 (JP)

(72) Inventors:
• KANAI, Daisuke
  Tokyo 105-6409 (JP)
• HASHIMOTO, Yuichiro
  Tokyo 105-6409 (JP)
• AKIEDA, Daisuke
  Tokyo 105-6409 (JP)

(74) Representative: MERH-IP Matias Erny Reichl
Hoffmann
Patentanwälte PartG mbB
Paul-Heyse-Strasse 29
80336 München (DE)

(54) **TEST METHOD**

(57)   Provided is an inspection method for a liquid feeding device capable of preventing an increase in the number of components, a decrease in throughput, and an increase in a leakage source. The method includes: suctioning a fluid from a fluid tank into a first cylinder by driving a first plunger in a suction direction; driving the first plunger in a discharge direction after suction; stopping the first plunger for a predetermined first time; driving the first plunger in the discharge direction; and estimating a leakage amount in a flow path on an upstream side of a second check valve based on a detection value of a pressure detected by a pressure sensor from start of the driving of the first plunger in the discharge direction to end of the driving of the first plunger in the discharge direction.

[FIG. 1]

EP 4 403 773 A1

**Description**

[Technical Field]

The present invention relates to an inspection method.

[Background Art]

A high-performance liquid chromatograph mass spectrometer (HPLC/MS) is an apparatus capable of making a qualitative and quantitative determination of each component in a sample by means of a combination of a separation by chemical structure and the physical properties of substances to be measured using a high-performance liquid chromatograph (HPLC) and a separation by mass of the substances to be measured using a mass spectrometer (MS). Because of the characteristics, for example, even if many similar substances metabolized inside the body such as medicine in a biological sample are mixed, the qualitative and quantitative determination of the substance to be measured can be performed. Thus, this is expected to be applied to laboratory inspecting discipline.

The liquid chromatograph (LC) includes: a liquid feeding pump for feeding a liquid mobile phase; an autosampler for loading samples; a separation column for separating a sample; a detector for detecting a target component in a sample; piping for connecting them; a control device for controlling apparatus operation; and the like. The liquid feeding performance of the liquid chromatograph may have an influence on analytical precision of the liquid chromatograph mass spectrometer. For example, the liquid feeding performance may be decreased by looseness in the flow path piping and/or leakage from a flow path component. To address this, in the liquid chromatograph, for the purpose of guaranteeing the liquid feeding performance, for example, inspection for a withstand pressure is performed to measure the amount of leakage from a flow path.

For example, the following are known as technologies for inspecting for the withstand pressure on the liquid chromatograph.

Patent Literature 1 discloses a high-pressure constant flow rate pump in which a pressure detection value from a second pressure sensor and a pressure detection value from a fourth pressure sensor are compared with each other, and if the pressure detection value of the second pressure sensor is equal to or higher than the pressure detection value of the fourth pressure sensor, a second check valve is turned to an open position and the termination is reached, whereas if the pressure detection value of the second pressure sensor is less than the pressure detection value of the fourth pressure sensor, a leak determination is performed. Then, if no leak is determined, a solvent determination is performed and then, for a first plunger designated for each of solvents pre-stored in memory, a compression distance is added for driving.

Also, Patent Literature 2 discloses a pumping apparatus, in which, in test mode, a control means directs one of two motors to go into pumping mode which places one of first and second pumping chambers under pressure and places such pumping apparatus in fluid communication with the pumping chamber under pressure through to the opposite check valve, and the outlet check valve of the opposite pumping chamber can be tested. Further, one motor is placed in pumping mode and then the other motor is placed in pumping mode to allow testing of the two outlet check valves.

[Citation List]

[Patent Literature]

Patent Literature 1: Japanese Unexamined Patent Application Publication No. 2014-215125
Patent Literature 2: Japanese Unexamined Patent Application Publication No. 2008-111856

[Summary of Invention]

[Technical Problem]

Now, in the inspection for the withstand pressure of the liquid chromatograph, a plurality of pressure sensors may be placed in a flow path with consideration given to a member which is likely to have different pressures between the upstream side and the downstream side, such as check valves. However, the increased number of components may lead to an increase in component cost, complicated maintenance, a decrease in throughput caused by an increase in flow path capacity, an increase in leakage source caused by an increase in the number of junctions of the flow paths, and/or the like.

The present invention has been made in view of the above, and it is an object of the present invention to provide a method for inspecting a liquid feeding device capable of preventing an increase in the number of components, a decrease in throughput, and an increase in leakage source.

[Solution to Problem]

The present application includes a plurality of solutions of the above problems, and one such example will be given below. A method for inspecting withstand pressure of a liquid feeding device is provided, the liquid feeding device including: a first cylinder; a first plunger that reciprocates in the first cylinder; a fluid tank that is connected to an upstream side of the first cylinder and stores a fluid to be fed; a first check valve that is connected to an upstream side of the first cylinder and prevents a backflow of the liquid to be fed from the first cylinder to the fluid tank; a second check valve that is connected to a downstream side of the first cylinder and prevents a backflow of the liquid to be fed from a flow path on a downstream side to the first cylinder, and a pressure sensor that is connected to a downstream side of the second check valve. The method includes: a suction step of suctioning a fluid from the fluid tank into the first cylinder by driving the first plunger in a suction direction; a first step of driving the first plunger in a discharge direction after the suction step; a second step of stopping the first plunger for a predetermined first time; a third step of driving the first plunger in the discharge direction; and a fourth step of estimating a leakage amount in a flow path on an upstream side of the second check valve based on a detection value of a pressure detected by the pressure sensor from start of the second step to end of the third step.

[Advantageous Effects of Invention]

According to the present invention, it is possible to prevent an increase in the number of components, a decrease in throughput, and an increase in leakage source.

[Brief Description of Drawings]

[FIG. 1] FIG. 1 is a diagram schematically showing an overall configuration of a liquid chromatograph including a liquid feeding device according to a first embodiment.
[FIG. 2] FIG. 2 is a flowchart showing processing contents for inspecting a withstand pressure according to the first embodiment.
[FIG. 3] FIG. 3 is a diagram showing a relationship between a position of a first plunger in a first cylinder and a pressure in the first cylinder.
[FIG. 4] FIG. 4 is a diagram showing an example of a time change of a detection value of a pressure sensor.
[FIG. 5] FIG. 5 is a diagram schematically showing an overall configuration of a liquid chromatograph including a liquid feeding device according to a second embodiment.
[FIG. 6] FIG. 6 is a diagram showing a relationship between a liquid feeding operation of a cylinder pump and positions of first and second plungers with respect to first and second cylinders.
[FIG. 7] FIG. 7 is a flowchart showing processing contents for inspecting a withstand pressure according to the second embodiment.
[FIG. 8] FIG. 8 is a diagram showing an example of a time change of a detection value of a pressure sensor.

[Description of Embodiments]

Embodiments according to the present invention will now be described with reference to the accompanying drawings.
In the embodiments, a liquid chromatograph (LC) is provided for purpose of illustration, and is not intended to be limiting. Therefore, the invention may be applied to another chromatograph such as a high-performance liquid chromatograph (HPLC), an ultra-high performance liquid chromatograph (UHPLC) and the like.

First Embodiment

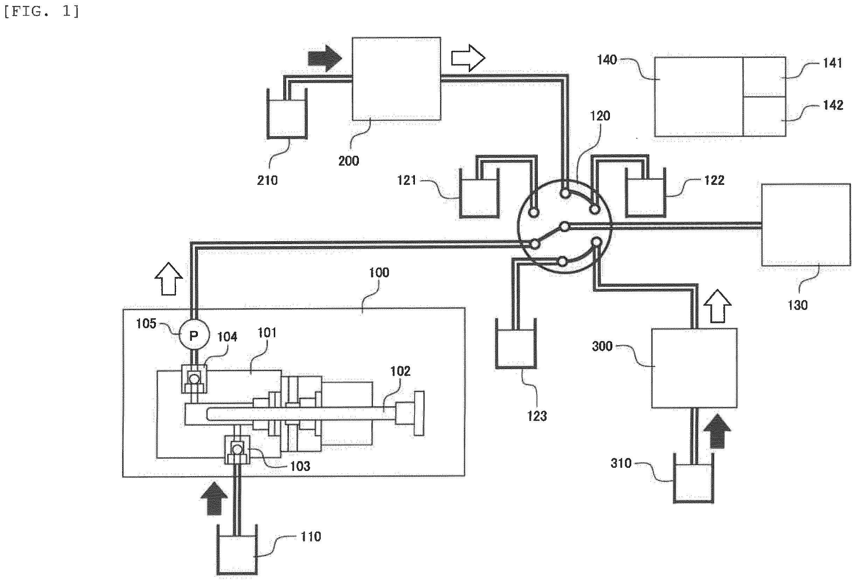

A first embodiment according to the present invention will be described in detail with reference to Fig. 1 to Fig. 4.
Fig. 1 is a diagram schematically showing an overall configuration of a liquid chromatograph including a liquid feeding device according to the embodiment.
In Fig. 1, the liquid chromatograph includes a liquid feeding device for feeding liquid (solvent) to a liquid feeding destination 130. Examples of the liquid feeding destination 130 of liquid (solvent) in the liquid chromatograph include locations requiring to be fed with liquid (solvent) such as a measurement portion of a separation column, a mass spectrometer (MS), a diode array detector (DAD) or the like, an injection unit, piping to be cleaned and/or the like.

The liquid feeding device roughly includes: a cylinder pump 100 that sucks and feeds a solvent from a solvent bottle 110 containing liquid (solvent) to be fed; cylinder pumps 200, 300 that have the same configuration as that of the cylinder pump 100 and suck and feed a solvent respectively from solvent bottles 210, 310 containing liquid (solvent) to be fed; a valve 120 that switches a channel for feeding a liquid from the cylinder pumps 100, 200, 300 among the liquid feeding destination 130, waste liquid bottles 121, 122 and 123; and a control device 140 that controls the operation of the entire liquid chromatograph including the liquid feeding device.

The solvent bottle (fluid tank) 110 storing a fluid to be fed is connected to an upstream side of the cylinder pump 100 (more properly, a first cylinder 101 which will be described later). The cylinder pump 100 is a so-called single cylinder pump including a single cylinder, which includes: a first cylinder 101; a first plunger 102 that reciprocates in the first cylinder 101; a first check valve 103 that is connected to an upstream side of the first cylinder 101 and prevents a backflow of the liquid to be fed from the first cylinder 101 to the solvent bottle 110; a second check valve 104 that is connected to a downstream side of the first cylinder 101 and prevents a backflow of the liquid to be fed from a flow path on a downstream side to the first cylinder 101; and a pressure sensor 105 that is connected to a downstream side of the second check valve 104. The cylinder pumps 200, 300 have a similar configuration thereto.

In the cylinder pump 100, the first plunger 102 is moved in the direction in which the plunger is pulled out of the first cylinder 101 (moved toward the right side of Fig. 1), so that the volume of the first cylinder 101 is increased to decrease the internal pressure in the first cylinder 101. At this time, the second check valve 104 is closed by a pressure difference between the upstream side and the downstream side. The first check valve 103 is opened by a pressure difference between the upstream side and the downstream side. Therefore, the solvent is sucked from the solvent bottle 110 into the first cylinder 101.

Also, the first plunger 102 is moved in the direction in which the first plunger 102 is pushed into the first cylinder 101 (moved toward the left side of Fig. 1), so that the volume of the first cylinder 101 is decreased to increase the internal pressure in the first cylinder 101. At this time, the first check valve 103 is closed by a pressure difference between the upstream side and the downstream side. The second check valve 104 is opened by a pressure difference between the upstream side and the downstream side. Therefore, the solvent in the first cylinder 101 is fed toward the downstream side.

In this manner, the first plunger 102 is able to slide backward and forward within the first cylinder 101 to increase and decrease the volume of the first cylinder 101. The solvent in the solvent bottle 110 is sucked into the first cylinder 101 through the first check valve 103, which is then fed downstream through the second check valve.

The pressure sensor 105 detects a pressure in the flow path on the downstream side of the second check valve 104, and transmits the detection result (pressure value) to the control device 140.

The valve 120 rotates in a clockwise direction or in a counterclockwise direction in order to switch selectively the connection relationship between flow paths connected to the respective ports. For example, in the example illustrated in Fig. 1, the solvent fed from the cylinder pump 100 is fed to the liquid feeding destination 130. Also, for example, a counterclockwise rotation of the valve 120 through 120 degrees from the state of Fig. 1 permits the flow path of the valve 120 to switch such that the solvent fed from the cylinder pump 100 is fed to the waste liquid bottle 121, and a solvent is fed from another cylinder pump 300 to the liquid feeding destination 130.

The control device 140 has an input device 141 such as a keyboard, a mouse and/or the like, and an output device 142 such as a display device such as monitor and/or the like, a printer and/or the like. It is noted that any device having both input and display functions such as a touch panel may be used as the input device 141 and the output device 142 provided in the control device 140. The control device 140 controls the operation of the liquid feeding device while acquiring a detection result (pressure value) from the pressure sensor 105 and using the acquired pressure value to perform inspection for a withstand pressure.

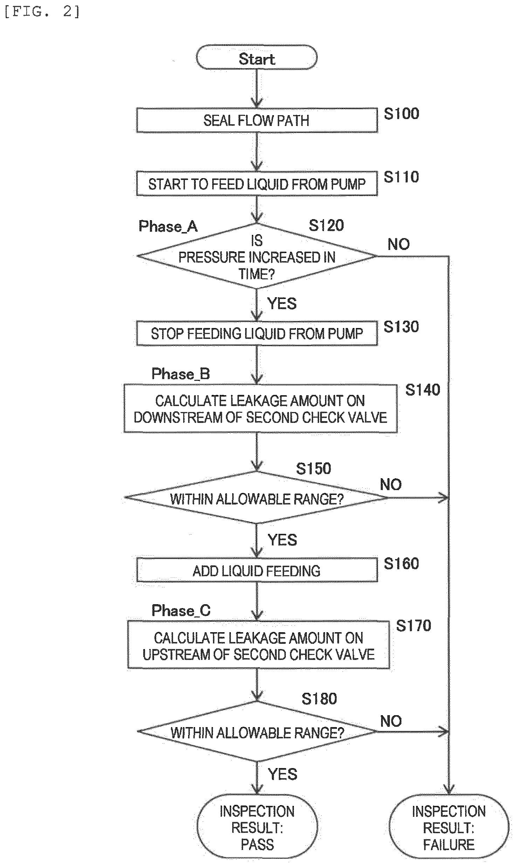

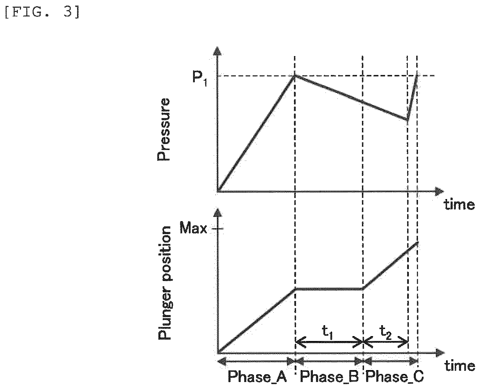

Fig. 2 is a flowchart showing processing contents for inspecting a withstand pressure. Also, Fig. 3 is a diagram showing a relationship between a position of the first plunger in the first cylinder and a pressure in the first cylinder.

The control device 140 performs the inspection for the withstand pressure at startup of the liquid chromatograph including the liquid feeding device and/or before measurement.

In the inspection for the withstand pressure, first, the control device 140 performs hermetical seal on the flow path to be inspected (step S100). For example, a method used for this purpose is to rotate the valve 120 30 degrees counterclockwise from the state of Fig. 1 in order to eliminate a connection destination of the flow path to be inspected (a flow path leading to the cylinder pump 100 in this case).

Subsequently, the liquid feed from the cylinder pump 100 is started (step S110) to raise the pressure (a detection value of the pressure sensor 105) until a predetermined target pressure P1 (Phase_A).

Subsequently, it is determined whether or not the pressure has risen to a pressure P1 within a predetermined time period (step S120). If the determination result is NO, it is determined that the result of the inspection for the withstand pressure is fail, and the processing is terminated. Also, if the determination result in step S120 is YES, the liquid feed from the cylinder pump 100 is stopped (step S130) . It is noted that, in the processing in step S120, a leakage amount allowed in a flow path area from the cylinder pump 100 to the hermetically sealed site (valve 120) may be considered to impose a limit on the liquid feeding time (oc a stroke of the first plunger 102).

Upon termination of the processing in step S130, subsequently, the cylinder pump 100 is not operated and held on standby for a predefined time period (Phase_B), and the leakage amount in a flow path on the downstream side of the second check valve 104 is calculated from the amount of pressure drop during standby (step S140) .

Subsequently, it is determined whether or not the calculated leakage amount in the flow path on the downstream side of the second check valve 104 falls within a predetermined allowable range (step S150), and if the determination result is NO, it is determined that the result of the inspection for the withstand pressure is fail, and the processing is terminated. Also, if the determination result in step S150 is YES, the liquid feed from the cylinder pump 100 is restarted to perform an additional liquid feed (step S160). A pressure rise until an arbitrary pressure (e.g., pressure P1) is attempted (Phase_C), and the leakage amount in a flow path on the upstream side of the second check valve 104 is calculated (step S170).

Subsequently, it is determined whether or not the calculated leakage amount in the flow path on the upstream side of the second check valve 104 falls within a predetermined allowable range (step S180), and if the determination result is YES, it is determined that the result of the inspection for the withstand pressure is acceptable, and the processing is terminated. Also, if the determination result in step S180 is NO, it is determined that the result of the inspection for the withstand pressure is fail, and the processing is terminated.

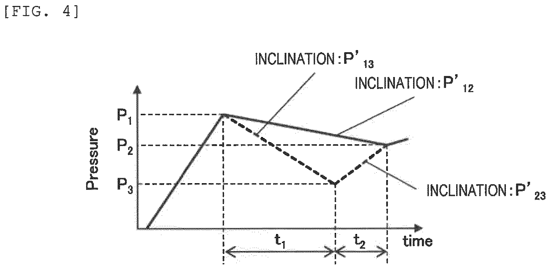

Here, a method for calculating the leakage amount in a flow path on the upstream side of the second check valve 104 is described with reference to Fig. 4.

In the following description, the leakage amount per unit time in a flow path on the upstream side of the second check valve 104 is defined as $V'L.1$, and the leakage amount per unit time in a flow path on the downstream side is defined as $V'L2$. Fig. 4 illustrates the state when the leakage amount $V'L1$ >the leakage amount $V'L2$, and also when an increase in pressure value because of the additional liquid feed (step S160 in Fig. 2) is observed.

Also, in Fig. 4, the solid line shows the detection values of the pressure sensor 105, and $P'12$ is a slope of a pressure drop from the start of Phase_B to when a pressure rise is observed in Phase_C. Also, a dotted line shows estimated pressure values in a flow path on the upstream side of the second check valve 104. $P'13$ is an estimated slope of a pressure drop from the start of Phase_B to the start of the additional liquid feed (step S160 in Fig. 2), and $P'23$ is an estimated slope of a pressure rise from the start of the additional liquid feed (step S160 in Fig. 2) to when a pressure rise is observed.

Also, P1 is a reached target pressure value in Phase_A. P2 is a pressure value when the pressure turns upward by the additional liquid feed (step S160 in Fig. 2). And P3 is an estimated pressure in a flow path on the upstream side of the second check valve 104 at the start of Phase_C.

Also, V1 is the volume from the first check valve 103 to the second check valve 104, and V2 is a volume from the second check valve 104 to the hermetically sealed site (the valve 120 in this case) . Also, F is the flow rate of liquid fed per unit time during the additional liquid feed (step S160 in Fig. 2).

At this time, the amount of pressure change P' per unit time in the closed flow path is represented by the following (Eq. 1), using a volume elasticity modulus k, a flow-path volume V, and a leakage volume $V'L$ per unit time.

$$P' = (k/V) \times V'L \qquad (Eq.\ 1)$$

Therefore, the following relationships (Eq. 2) to (Eq. 4) are derived.

$$P'12 = (k/V2) \times V'L2 \qquad (Eq.\ 2)$$

$$P'13 = (k/V1) \times V'L1 \qquad (Eq.\ 3)$$

$$P'23 = (k/V1) \times (F+V'L1) \qquad (Eq.\ 4)$$

The rearrangement of the above Eq. 2 to Eq. 4 gives the following Eq. 5 using only a design value, a physical property value and an observable measured value for the leakage amount $V'L1$ per unit time in a flow path on the upstream side of the second check valve 104.

$V'L1 = (V1P'12) / k - (t2F) / (t1 + t2) = (V1V'L2) / V2 - (t2F) / (t1 + t2)$

When V'L1 ≤ V' L2, in the calculation of the leakage amount (step S140 in Fig. 2), it is possible to make evaluation including the leakage amount in the flow path on the upstream side of the second check valve 104. Also, when an increase in pressure value is not observed in the additional liquid feed (step S160 in Fig. 2), a lowest value of the leakage amount can be estimated.

In the embodiment as described above, the liquid feeding device includes: the first cylinder 101; the first plunger 102 that reciprocates in the first cylinder 101; the solvent bottle 110 (fluid tank) that is connected to the upstream side of the first cylinder 101 and stores a fluid to be fed; the first check valve 103 that is connected to the upstream side of the first cylinder 101 and prevents a backflow of the liquid to be fed from the first cylinder 101 to the solvent bottle 110; the second check valve 104 that is connected to the downstream side of the first cylinder 101 and prevents a backflow of the liquid to be fed from a flow path on the downstream side to the first cylinder 101; and the pressure sensor 105 that is connected to the downstream side of the second check valve 104. A method of performing the inspection for the withstand pressure on the liquid feeding device is configured to include: a suction step of suctioning a fluid from the solvent bottle 110 into the first cylinder 101 by driving the first plunger 102 in a suction direction; a first step of driving the first plunger 102 in a discharge direction after the suction step; a second step of stopping the first plunger 102 for a predetermined first time; a third step of driving the first plunger 102 in the discharge direction; and a fourth step of estimating a leakage amount in a flow path on the upstream side of the second check valve 104 based on a detection value of a pressure detected by the pressure sensor 105 from start of the second step to end of the third step.

In short, the pressure sensor 105 is placed only on the upstream side of the second check valve 104, and the detection value of the pressure sensor 105 is used to perform the inspection for the withstand pressure on the upstream side and the downstream side of the second check valve 104. Thus, an unnecessary increase in the number of components (the number of pressure sensors) may be prevented. In turn, an increase in component cost and/or complicated maintenance may be prevented.

Also, the prevention of an increase in the number of pressure sensors is enabled, so that an increase in flow path capacity may be prevented, leading to prevention of a decrease in throughput.

It also is possible to prevent an increase in the number of junctions of the flow paths, that is, an increase in the number of possible leakage source.

Second Embodiment

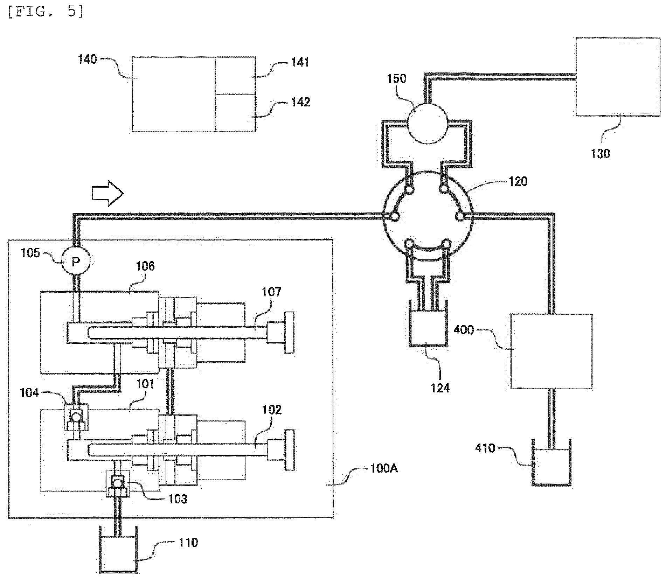

A second embodiment according to the present invention will be described in detail with reference to Fig. 5 to Fig. 8.

In the embodiment, an example is described where the present invention is applied to a so-called 2-cylinder pump configured to include two cylinders.

Fig. 5 is a diagram schematically showing an overall configuration of a liquid chromatograph including a liquid feeding device according to the embodiment. In Fig. 5, like reference sings indicate similar members to those in the first embodiment and a description is omitted.

In Fig. 5, a liquid chromatograph is equipped with a liquid feeding device to feed liquid (solvent) to the liquid feeding destination 130. Examples of the liquid feeding destination 130 of liquid (solvent) in the liquid chromatograph include locations requiring to be fed with liquid (solvent) such as a measurement portion of a separation column, a mass spectrometer (MS), a diode array detector (DAD) or the like, an injection unit, piping to be cleaned and/or the like.

The liquid feeding device roughly includes: a cylinder pump 100A that sucks and feeds a solvent from a solvent bottle 110 containing liquid (solvent) to be fed; a cylinder pump 400 that sucks and feeds a solvent from a solvent bottle 410 containing liquid (solvent) to be fed; a valve 120 that switches a channel for feeding a liquid from the cylinder pumps 100A, 400 between the liquid feeding destination 130 and a waste liquid bottle 124; a mixing device (mixer) 150 for mixing solvents supplied from the cylinder pumps 100A, 400 via the valve 120 to feed the mixture to the liquid feeding destination 130; and a control device 140 that controls the operation of the entire liquid chromatograph including the liquid feeding device. It is noted that the cylinder pump 400 has the same configuration as that of the cylinder pump 100A.

The solvent bottle 110 storing a fluid to be fed is connected to an upstream side of the cylinder pump 100A (more properly, a first cylinder 101 which will be described later) . The cylinder pump 100A is a so-called 2-cylinder pump including two cylinders, which includes: a first cylinder 101; a first plunger 102 that reciprocates in the first cylinder 101; a first check valve 103 that is connected to an upstream side of the first cylinder 101 and prevents a backflow of the liquid to be fed from the first cylinder 101 to the solvent bottle 110; a second check valve 104 that is connected to a downstream side of the first cylinder 101 and prevents a backflow of the liquid to be fed from a flow path on a downstream side to the first cylinder 101; a second cylinder 106 that is connected to a downstream side of the second check valve 104; a second plunger 107 that reciprocates in the second cylinder 106; and a pressure sensor 105 that is connected to a flow path on a downstream side of the second cylinder 106.

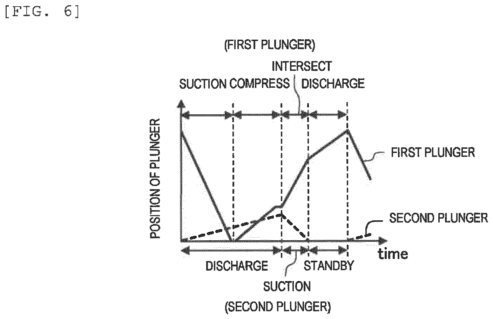

Here, the liquid feeding operation in the cylinder pump 100A is described. Fig. 6 is a diagram showing a relationship between a liquid feeding operation of the cylinder pump and positions of the first and second plungers with respect to the first and second cylinders.

In Fig. 6, the solid line shows the position of the first plunger 102, and the dotted line shows the position of the second plunger 107. It is noted that, in Fig.6, the vertical axis represents the position of the plunger with respect to the cylinder, and the horizontal axis represents time, in which the upward along the vertical axis corresponds to the insertion direction into the cylinder (on the left side in Fig. 5), that is, the direction of feeding liquid.

As illustrated in Fig. 6, the first plunger 102 is slid from an initial position (the position where the first cylinder 101 has a minimum capacity) in the suction direction (the direction in which the plunger is pulled out of the first cylinder 101). Thereby, during suction of a solvent from the solvent bottle 110 into the first cylinder 101 (during suction), the second plunger 107 is slid from an initial position (the position where the second cylinder 106 has a maximum capacity) in the liquid feeding direction (the direction in which the second plunger 107 is pushed into the second cylinder 106) . Thereby, the solvent is fed downstream from the second cylinder 106. At this time, the first check valve 103 is closed by a pressure difference between the upstream side and the downstream side. The second check valve 104 is closed by a pressure difference between the upstream side and the downstream side. That is, the first cylinder 101 is filled with the solvent supplied from the solvent bottle 110, and the solvent in the second cylinder 106 is fed downstream.

Upon completion of the solvent filling by the suction of the first cylinder 101, subsequently, in parallel with the ongoing liquid feed from the second cylinder 106 toward the downstream side, the first plunger 102 is slid in the liquid feeding direction, so that the solvent in the first cylinder 101 is compressed to raise the pressure in the first cylinder 101 to a level equal to the pressure in the second cylinder 106. At this time, the first check valve 103 and the second check valve 104 are closed by pressure differences between the upstream side and the downstream side, respectively.

Upon completion of the compression, subsequently, sliding the second plunger 107 in the suction direction allows suction of the solvent fed from the first cylinder 101. At this time, the amount of liquid fed from the first cylinder 101 toward the downstream side (the stroke of the first plunger 102 in the liquid feeding direction) is increased to exceed the amount of suction of the second cylinder 106 (the stroke of the second plunger 107 in the suction direction). Thereby, the suction of the solvent of the second cylinder 106 and the liquid feed of the solvent from the second cylinder 106 toward the downstream side are provided by the liquid feed toward the downstream side by the first cylinder 101. The operation is termed crossing. At this time, the first check valve 103 is closed by a pressure difference between the upstream side and the downstream side, and the second check valve 104 is opened by a pressure difference between the upstream side and the downstream side.

After the solvent filling (crossing) from the first cylinder 101 to the second cylinder 106 is completed and the second plunger 107 reaches the initial position, subsequently, the second plunger 107 is stopped and placed on standby and also the first plunger 102 feeds liquid at a speed slower than that in the crossing in order to perform only the liquid feed toward the downstream side, and then the first plunger 102 returns to the initial position. At this time, the first check valve 103 is closed by a pressure difference between the upstream side and the downstream side, and the second check valve 104 is opened by a pressure difference between the upstream side and the downstream side.

By repeating the above operations, more specifically, the suction, compression, crossing and discharge operations of the first plunger 102 and the discharge, suction and standby operations of the second plunger 107, the cylinder pump 100A which is a 2-cylinder pump performs a liquid feed to the flow path on the downstream side on a consecutive basis.

The pressure sensor 105 detects a pressure in the flow path on the downstream side of the second check valve 104, and transmits the detection result (pressure value) to the control device 140.

The valve 120 rotates in a clockwise direction or in a counterclockwise direction in order to switch selectively the connection relationship between flow paths connected to the respective ports. For example, in the example illustrated in Fig. 5, the solvent fed from the cylinder pump 100A, 400 is fed to the liquid feeding destination 130 through the mixer 150. Also, if the flow path of the valve 120 is rotated 60 degrees counterclockwise from the state of Fig. 5, the solvent fed from the cylinder pump 100A, 400 can be switched to be fed to the waste liquid bottle 124.

The control device 140 has an input device 141 such as a keyboard, a mouse and/or the like, and an output device 142 such as a display device such as monitor and/or the like, a printer and/or the like. It is noted that any device having both input and display functions such as a touch panel may be used as the input device 141 and the output device 142 provided in the control device 140. The control device 140 controls the operation of the liquid feeding device while acquiring a detection result (pressure value) from the pressure sensor 105 and using the acquired pressure value to perform the inspection for the withstand pressure.

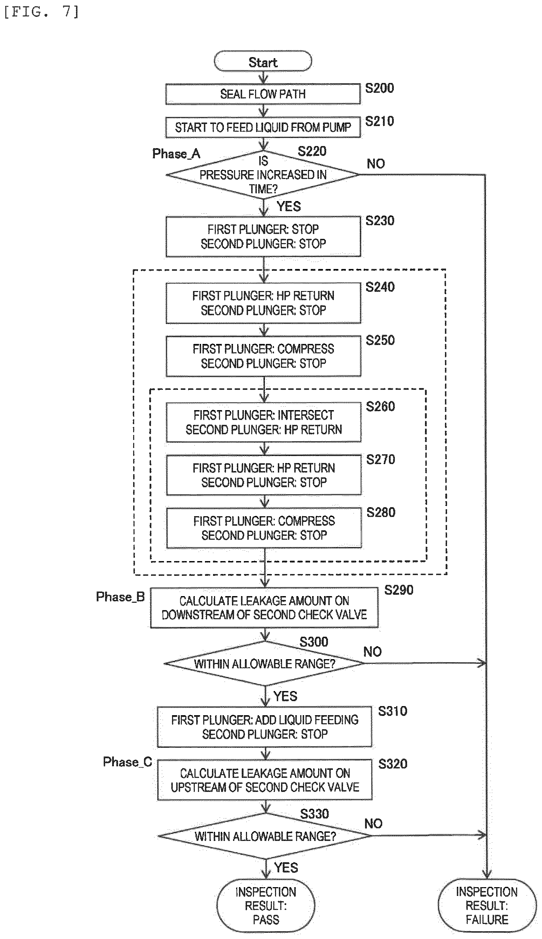

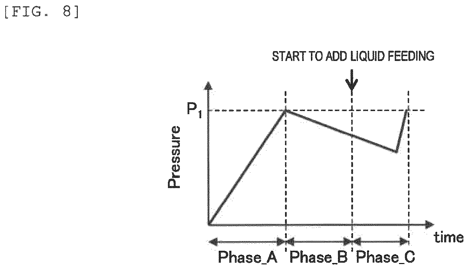

Fig. 7 is a flowchart showing processing contents for inspecting the withstand pressure according to the embodiment. Also, Fig. 8 is a diagram showing an example of a time change of a detection value of a pressure sensor.

The control device 140 performs the inspection for the withstand pressure at startup of the liquid chromatograph including the liquid feeding device and/or before measurement.

In the inspection for the withstand pressure, first, the control device 140 performs hermetical seal on a flow path to be inspected (step S200).

Subsequently, the liquid feed from the cylinder pump 100A is started (step S210) to raise the pressure (a detection value of the pressure sensor 105) until a predetermined target pressure P1 (Phase_A).

Subsequently, it is determined whether or not the pressure has risen to a pressure P1 within a predetermined time period (step S220) . If the determination result is NO, it is determined that the result of the inspection for the withstand pressure is fail, and the processing is terminated. Also, if the determination result in step S220 is YES, the first plunger 102 and the second plunger 107 are stopped to stop the liquid feed from the cylinder pump 100A (step S230). It is noted that, in the processing in step S220, a leakage amount allowed in a flow path area from the cylinder pump 100A to the hermetically sealed site (valve 120) may be considered to impose a limit on the liquid feeding time (oc a compression efficiency of the second cylinder 106) .

Subsequently, in order to allow the first plunger 102 to have an extra stroke in a later additional liquid feed (later step S310) performed by the first plunger 102, a HP return is performed on the first plunger 102, and also the second plunger 107 is stopped (step S240), and then compression is performed by the first plunger 102 and the second plunger 107 is stopped (step S250) .

Subsequently, for the purpose of obtaining an accurate capacity of the second cylinder 106, while the crossing operation is performed using the first plunger 102, the HP return is performed on the second plunger 107 (step S260). Then, the HP return is performed on the first plunger 102 and the second plunger 107 is stopped (step S270). Then, compression is performed by the first plunger 102 and the second plunger 107 is stopped (step S280).

Subsequent to the processing in step S280, the cylinder pump 100A is not operated and held on standby for a predefined time period (Phase_B), and the leakage amount in a flow path on the downstream side of the second check valve 104 is calculated from the amount of pressure drop during standby (step S290).

Subsequently, it is determined whether or not the calculated leakage amount in the flow path on the downstream side of the second check valve 104 falls within a predetermined allowable range (step S300), and if the determination result is NO, it is determined that the result of the inspection for the withstand pressure is fail, and the processing is terminated.

Also, if the determination result in step S300 is YES, an additional liquid feed is performed by driving the first plunger 102, and the second plunger107 is stopped (step S310). A pressure rise until an arbitrary pressure (e.g., pressure P1) is attempted (Phase_C), and the leakage amount in a flow path on the upstream side of the second check valve 104 is calculated (step S320). It is noted that a method for calculating the leakage amount in a flow path on the upstream side of the second check valve 104 is similar to that in the first embodiment (see Fig. 4).

Subsequently, it is determined whether or not the calculated leakage amount in the flow path on the upstream side of the second check valve 104 falls within a predetermined allowable range (step S330), and if the determination result is YES, it is determined that the result of the inspection for the withstand pressure is acceptable, and the processing is terminated. Also, if the determination result in step S330 is NO, it is determined that the result of the inspection for the withstand pressure is fail, and the processing is terminated.

The other configurations are the same as or similar to those in the first embodiment.

In the embodiment with configurations as described above, it is also possible to obtain similar or the same configurations in the first embodiment.

Additional Statement

It should be understood that the present invention is not limited to the above embodiments and various modifications and combinations are intended to be included within the scope of the invention without deviating from the gist. Further, the present invention does not necessarily include the entire configuration described in the above embodiments and includes any configuration even if it is partially deleted. Further, each of the above configurations, functions and the like may be partially or entirely implemented by, for example, being designed using an integrated circuit and/or the like. Further, each of the above configurations, functions and/or the like may be implemented by software causing a processor to interpret and perform a program for implementing each function.

[Reference Signs List]

| | |
|---|---|
| 100, 100A, 200, 300, 400 | cylinder pump |
| 101 | first cylinder |
| 102 | first plunger |
| 103 | first check valve |
| 104 | second check valve |

| 105 | pressure sensor |
| 106 | second cylinder |
| 107 | second plunger |
| 110, 210, 310, 410 | solvent bottle |
| 120 | valve |
| 121, 122, 123, 124 | waste liquid bottle |
| 130 | liquid feeding destination |
| 140 | control device |
| 141 | input device |
| 142 | output device |
| 150 | mixer |

**Claims**

1. A method for inspecting withstand pressure of a liquid feeding device, the liquid feeding device including

   a first cylinder,
   a first plunger that reciprocates in the first cylinder,
   a fluid tank that is connected to an upstream side of the first cylinder and stores a fluid to be fed,
   a first check valve that is connected to an upstream side of the first cylinder and prevents a backflow of the liquid to be fed from the first cylinder to the fluid tank,
   a second check valve that is connected to a downstream side of the first cylinder and prevents a backflow of the liquid to be fed from a flow path on a downstream side to the first cylinder, and
   a pressure sensor that is connected to a downstream side of the second check valve,
   the method comprising:

   a suction step of suctioning a fluid from the fluid tank into the first cylinder by driving the first plunger in a suction direction;
   a first step of driving the first plunger in a discharge direction after the suction step;
   a second step of stopping the first plunger for a predetermined first time;
   a third step of driving the first plunger in the discharge direction; and
   a fourth step of estimating a leakage amount in a flow path on an upstream side of the second check valve based on a detection value of a pressure detected by the pressure sensor from start of the second step to end of the third step.

2. The method for inspecting withstand pressure of a liquid feeding device according to claim 1, wherein

   in the first step, the first plunger is driven in the discharge direction such that the detection value of the pressure sensor reaches a first target pressure value, and
   in the third step, the first plunger is driven in the discharge direction such that the detection value of the pressure sensor reaches a second target pressure value.

3. The method for inspecting withstand pressure of a liquid feeding device according to claim 1, wherein

   the liquid feeding device includes a second cylinder that is provided on a downstream side of the first cylinder and provided between the first cylinder and the pressure sensor, and a second plunger that reciprocates in the second cylinder,
   upon completion of the first step, the first plunger and the second plunger are driven such that a pressure in the first cylinder and a pressure in the second cylinder are the same,
   in the second step, the first plunger and the second plunger are stopped for the first time, and
   in the third step, the second plunger is fixed, and only the first plunger is driven in the discharge direction.

4. The method for inspecting withstand pressure of a liquid feeding device according to claim 3, wherein
   upon the completion of the first step, the second plunger is driven such that the second cylinder moves to a predetermined position.

5. The method for inspecting withstand pressure of a liquid feeding device according to claim 1, the method further comprising:
a fifth step of issuing a warning when the leakage amount estimated in the fourth step exceeds a predetermined threshold value.

6. The method for inspecting withstand pressure of a liquid feeding device according to claim 1, wherein the first step to the fourth step are carried out when the liquid feeding device is started.

EP 4 403 773 A1

[FIG. 1]

11

[FIG. 2]

```
                    ┌─────────────┐
                    │    Start    │
                    └──────┬──────┘
                           │
                    ┌──────▼──────────────┐
                    │   SEAL FLOW PATH    │  S100
                    └──────┬──────────────┘
                           │
                    ┌──────▼────────────────────────┐
                    │ START TO FEED LIQUID FROM PUMP │  S110
                    └──────┬─────────────────────────┘
                           │
   Phase_A         ┌───────▼───────┐  S120
                   │      IS       │              NO
                  ◄ PRESSURE INCREASED IN ►──────────────┐
                   │     TIME?     │                      │
                    └──────┬───────┘                      │
                           │ YES                          │
                    ┌──────▼────────────────────────┐     │
                    │ STOP FEEDING LIQUID FROM PUMP  │  S130 │
                    └──────┬─────────────────────────┘     │
   Phase_B                 │                               │
                    ┌──────▼──────────────────────┐  S140  │
                    │  CALCULATE LEAKAGE AMOUNT ON │        │
                    │ DOWNSTREAM OF SECOND CHECK VALVE │    │
                    └──────┬───────────────────────┘       │
                           │                               │
                    ┌──────▼───────┐  S150                 │
                    │              │              NO       │
                   ◄ WITHIN ALLOWABLE RANGE? ►─────────────┤
                    └──────┬───────┘                       │
                           │ YES                           │
                    ┌──────▼──────────────┐  S160          │
                    │  ADD LIQUID FEEDING │                │
                    └──────┬──────────────┘                │
   Phase_C                 │                               │
                    ┌──────▼──────────────────────┐  S170  │
                    │ CALCULATE LEAKAGE AMOUNT ON  │        │
                    │ UPSTREAM OF SECOND CHECK VALVE │      │
                    └──────┬───────────────────────┘       │
                           │                               │
                    ┌──────▼───────┐  S180                 │
                    │              │              NO       │
                   ◄ WITHIN ALLOWABLE RANGE? ►─────────────┤
                    └──────┬───────┘                       │
                           │ YES                           │
                    ┌──────▼──────┐            ┌───────────▼──┐
                    │ INSPECTION  │            │  INSPECTION  │
                    │  RESULT:    │            │   RESULT:    │
                    │   PASS      │            │   FAILURE    │
                    └─────────────┘            └──────────────┘
```

[FIG. 3]

[FIG. 4]

[FIG. 5]

[FIG. 6]

[FIG. 7]

**Start**

SEAL FLOW PATH — S200

START TO FEED LIQUID FROM PUMP — S210

Phase_A — IS PRESSURE INCREASED IN TIME? — S220 — NO

YES

FIRST PLUNGER: STOP
SECOND PLUNGER: STOP — S230

FIRST PLUNGER: HP RETURN
SECOND PLUNGER: STOP — S240

FIRST PLUNGER: COMPRESS
SECOND PLUNGER: STOP — S250

FIRST PLUNGER: INTERSECT
SECOND PLUNGER: HP RETURN — S260

FIRST PLUNGER: HP RETURN
SECOND PLUNGER: STOP — S270

FIRST PLUNGER: COMPRESS
SECOND PLUNGER: STOP — S280

Phase_B — CALCULATE LEAKAGE AMOUNT ON DOWNSTREAM OF SECOND CHECK VALVE — S290

WITHIN ALLOWABLE RANGE? — S300 — NO

YES

FIRST PLUNGER: ADD LIQUID FEEDING
SECOND PLUNGER: STOP — S310

Phase_C — CALCULATE LEAKAGE AMOUNT ON UPSTREAM OF SECOND CHECK VALVE — S320

WITHIN ALLOWABLE RANGE? — S330 — NO

YES

INSPECTION RESULT: PASS

INSPECTION RESULT: FAILURE

[FIG. 8]

## INTERNATIONAL SEARCH REPORT

International application No.

**PCT/JP2022/027160**

### A. CLASSIFICATION OF SUBJECT MATTER

*F04B 51/00*(2006.01)i; *G01N 30/86*(2006.01)i
FI:   F04B51/00; G01N30/86 P

According to International Patent Classification (IPC) or to both national classification and IPC

### B. FIELDS SEARCHED

Minimum documentation searched (classification system followed by classification symbols)

F04B51/00; G01N30/86

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/055866 A1 (SHIMADZU CORP.) 29 March 2018 (2018-03-29) paragraph [0050] | 1-6 |
| A | WO 2019/008617 A1 (SHIMADZU CORP.) 10 January 2019 (2019-01-10) fig. 1 | 1-6 |
| A | CN 109282953 A (CHENGDU KERUI TECHNOLOGY CO., LTD.) 29 January 2019 (2019-01-29) fig. 1 | 1-6 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 August 2022** | **06 September 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

<table>
<tr><td colspan="2" rowspan="2" align="center"><b>INTERNATIONAL SEARCH REPORT</b><br><b>Information on patent family members</b></td><td colspan="2">International application No.<br><br><b>PCT/JP2022/027160</b></td></tr>
<tr></tr>
</table>

| Patent document cited in search report | Publication date (day/month/year) | Patent family member(s) | Publication date (day/month/year) |
|---|---|---|---|
| WO 2018/055866 A1 | 29 March 2018 | US 2019/0211813 A1<br>paragraph [0064]<br>EP 3517782 A1<br>CN 109154291 A | |
| WO 2019/008617 A1 | 10 January 2019 | US 2021/0156376 A1<br>fig. 1<br>CN 110621878 A | |
| CN 109282953 A | 29 January 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014215125 A
- JP 2008111856 A